**Europäisches Patentamt**

**European Patent Office**

**Office européen des brevets**

(19)

(11) Veröffentlichungsnummer : **0 098 527 B1**

# (12) EUROPÄISCHE PATENTSCHRIFT

(45) Veröffentlichungstag der Patentschrift :
21.12.88

(21) Anmeldenummer : 83106365.6

(22) Anmeldetag : 30.06.83

(51) Int. Cl.⁴ : **B 60 J 7/10**

(54) Strassenfahrzeug mit Kastenaufbau und Plane.

(30) Priorität : 07.07.82 DE 8219362 U

(43) Veröffentlichungstag der Anmeldung :
18.01.84 Patentblatt 84/03

(45) Bekanntmachung des Hinweises auf die Patenterteilung : 21.12.88 Patentblatt 88/51

(84) Benannte Vertragsstaaten :
FR GB IT NL

(56) Entgegenhaltungen :
DE–C– 835 408
DE–U– 1 906 881
DE–U– 7 638 695

(73) Patentinhaber : Westfalia-Werke Franz Knöbel &
Söhne KG
Am Sandberg 45
D-4840 Rheda-Wiedenbrück (DE)

(72) Erfinder : Koglin, Klaus
Flurstrasse 16
D-4410 Warendorf (DE)

(74) Vertreter : Meldau, Gustav, Dipl.-Ing. et al
Patentanwälte Dipl.-Ing. Gustav Meldau Dipl.-Phys.
Dr. H.-J. Strauss Postfach 2452 Vennstrasse 9
D-4830 Gütersloh 1 (DE)

## Beschreibung

Die Erfindung bezieht sich auf ein Straßenfahrzeug mit offenem Kastenaufbau, der von einer, gegebenenfalls über ein Gestell oder Spriegel gelegten Plane abgedeckt ist, wobei die Plane mittels einer abnehmbaren Befestigung an den Aussenseiten der Oberkanten des Kastenaufbaus festgezurrt ist und diese Befestigung aus einem elastischen Seil besteht, das zwischen den Befestigungen an beiden Enden der Kastenseiten gespannt zwischen unteren Haken an der Kastenseite sowie oberen Haken, den unteren Rand der Plane übergreifend, im wesentlichen zick-zackförmig gespannt ist.

Planenbefestigungen bei Straßenfahrzeugen sind vielfach derart ausgebildet, daß an den die Seitenwände des Kastenaufbaus überdeckende Unterkanten der Plane beispielsweise Löcher angeordnet sind, die über am Kastenaufbau festsitzende Stecksen o. dgl. gezogen und beispielsweise mittels eines durch die Ösen gezogenen Seils gesichert sind. Der einzige Vorteil derartiger Planenbefestigungen besteht darin, daß die Plane gesichert ist und auch plombiert werden kann. Das Anbringen der Plane und Einziehen des Seils nehmen sehr viel Arbeit und damit auch Zeit in Anspruch, ebenso wie beim Lösen der Plane. Bei derartigen Planenbefestigungen ist auch nicht sichergestellt, daß die Plane, die sich im Gebrauch ausweiten oder verziehen kann, mit der größt-möglichen Spannung festgezurrt ist.

Nach der DE-U-7 638 695 ist ein Aufbau mit Planen-Randkantenverschluß, insbesondere an LKW's beschrieben, bei dem durch einen vom Haken in einen Zick-Zack-Verlauf umgelenkten, über die Planenrandkante greifenden Gummizug der Verschluß der Plane gebildet wird. Dabei greifen im planenseitigen Bereich angeordnete Haken durch einzelne Augen der Plane hindurch. Diese Haken, die oberen Haken, sind unterhalb der Oberkante der Kastenseitenwand an dieser befestigt. In der Plane sind jedem einzelnen der oberen Haken zugeordnete Augen angeordnet, durch die die Haken hindurchgreifen, so daß also die Plane gewissermaßen schon allein durch diese an der Kastenwand befestigten oberen Haken gehalten werden könnte. Der Gummizug, der etwa im Zick-Zack zwischen diesen oberen Haken und unteren, ebenfalls an der Kastenseitenwand versetzt dazu angeordneten Haken geführt ist, dient daher lediglich und im wesentlichen der Festlegung der Plane und ihrer Sicherung, eine andere Aufgabe hat er nicht und kann diese auch nicht erfüllen. In der Praxis hat es sich herausgestellt, daß der die Plane sichernde Gummizug relativ leicht ausgehoben werden kann, beispielsweise durch Äste von Bäumen oder andere Gegenstände. Es ist bei einer derartigen Planenbefestigung nämlich gar nicht anderes möglich, als das die oberen Haken nach oben bzw. außen hin offen sind, so daß ein Herausheben des Gummizuges auch zufällig erfolgen kann. Um ein solch zufälliges Herausheben des Gummizuges zumindest zu erschweren, ist es angebracht, den Gummizug zwischen sämtlichen Haken im Zick-Zack zu führen, damit er möglichst hohe Spannung hat. Diese hohe Spannung wirkt sich jedoch ausschließlich auf die Verbesserung der Sicherung der Plane an den kastenfesten oberen Haken aus. Die Spannung der Plane wird dadurch in keiner Weise beeinflußt.

Die Erfindung hat sich die Aufgabe gestellt, Planenbefestigungen der gattungsgemäßen Art wesentlich zu verbessern und die Plane am Kasten nicht nur zu sichern, sondern auch zu spannen. Dabei soll die Anordnung auch so getroffen sein, daß das Spannseil gegen ein zufälliges Herausheben aus den Haken weitgehend gesichert ist.

Zur Lösung dieser Aufgabe ist ein Straßenfahrzeug der gattungsgemäßen Art dadurch gekennzeichnet, daß an oder in der Nähe der Unterkante der Plane ein oder mehrere Haken in Abständen voneinander befestigt sind, denen im Verlauf des gespannten Seils Rückhalte-Nasen an der Kastenwand versetzt zugeordnet sind. Dabei sind vorzugsweise die an der Plane befestigten Haken mit ihrer Einsatzöffnung gegen die Plane gerichtet angeordnet.

Nach der Erfindung dient das Spannseil nicht nur als Sicherung oder Verschluß der Plane bzw. deren Unterkante, sondern es wird mit dem Spannseil aufgrund der Verspannung zwischen den kastenfesten Haken einerseits und den planenfesten Haken andererseits bewirkt, daß die Plane aufgrund der Spannung des Spannseils allseits stramm und fest gezogen wird. Dabei läßt sich die Spannung, mit der die Glattzerrung erfolgt, in einem weiten Bereich dadurch variieren, daß der Gummizug bzw. das Spannseil entweder über viele obere Haken im Zick-Zack gelegt wird, oder aber nur über wenige. Im letzteren Fall ist die Gesamt-Auslängung und damit Dehnung des Gummizuges wesentlich geringer als im ersteren Fall. Es ist bekannt, daß über Spriegelaufbauten gezogene, kastenförmige Abdeckplanen aufgrund der Luftströmungen an der Frontseite einbeulen, im vordersten Bereich der Seitenwandungen weit ausbeulen und auf der Rückseite oft eingedrückt werden. Dabei erfolgt auch ein erhebliches Flattern der Planen, so daß sie an dem Auflage-Gestell reiben und vorzeitig abgenutzt und undicht werden. Diese Nachteile werden bei einer Planenbefestigung nach der Erfindung weitgehend vermieden, zumindest wird das Flattern von Planen ausserordentlich stark reduziert, dadurch, daß die Planen aufgrund ihrer Befestigung und Verspannung mittels des Spannseiles wesentlich stärker und besser gespannt sind als das bisher möglich war.

Durch die Anbringung der Haken unmittelbar an der Plane, entsprechend der Erfindung, besteht die Möglichkeit, die oberen Haken derart auszubilden bzw. anzubringen, daß ihre Öffnung nach innen gerichtet ist. Es ist dies ein weiterer besonderer Vorteil, der sich aus der Anordnung der Haken nach der Erfindung ergibt. Aufgrund dieser Anordnung der Haken mit nach innen gerichteter Einlege-Öffnung für das Spannseil ist es praktisch unmöglich, daß das Spannseil durch irgendwelche unerwünschten Zufälle aus einem Haken herausgehoben wird. Bei durch das zick-zack-förmig angeordnete Spannseil gespannter Plane werden die Haken mit ihrer nach innen gerichteten Öffnung gegen die Plane und den darunter liegenden obersten Bereich der Kastenwandung gedrückt, so daß damit die Hakenöffnungen geschlossen werden. Ein zufälliges Herausrutschen des Seils aus den Haken ist damit unmöglich. Andererseits ist das Lösen des Seils aus den Haken, die mit der Plane verbunden sind, von Hand verhältnismäßig leicht zu bewerkstelligen, in dem die Haken nach außen hochgekippt werden, so daß das unter Spannung stehende Spannseil herausgezogen wird. Ein solches Herauskippen der Haken ist nur deshalb möglich, weil die oberen Haken unmittelbar an der Plane befestigt sind.

Das Spannseil ist an seinen Enden mit je einer Verdickung versehen, mit der es in eine Aufnahmehöhlung eines Seilhalters eingesetzt ist. Der Seilhalter ist vorteilhaft im wesentlichen als zur Auflagefläche hin offener Kasten zur Aufnahme der Endverdickung des Seils ausgebildet, an einer Schmalwand ist er mit einer Ausnehmung zur Aufnahme des Seilquerschnittes versehen. Der Seilhalter ist weiterhin vorteilhaft mit einem Überstand seiner äußeren Abdeckung über eine Schmalseite hinaus versehen, so daß er auch als Rückhalte-Nase dienen kann.

Die an der Plane befestigten Haken sind in ihrem, der Hakenkrümmung gegenüberliegenden Teil mit einer Auflagefläche versehen, die in der äußeren Abschlußebene des Hakenendes liegt und mit der Plane vorzugsweise durch Kleben, Schweißen o. dgl. verbunden. Nach einer Weiterbildung können die an der Plane befestigten Haken bei T-förmigen Grundriß an den Enden des Querbalkens mit Lochungen zur Aufnahme der Verbindungsmittel mit der Plane, z. B. in Form von Nieten, versehen sein.

Nach einer vorteilhaften Ausführungsform können die an der Plane befestigten Haken mit einer Rückhaltevorrichtung, vorzugsweise in Form ei-ner, die Einsatzöffnung überdeckenden elasti-schen Zunge für das eingelegte Seil versehen sein. Nach einer besonders vorteilhaften Ausführungsform sind die an der Plane befestigten Haken außerhalb der Hakenkrümmung mit einem Überstand versehen, der im wesentlichen in Fortsetzung des Hakenstiels die Hakenkrümmung überragt.

Durch die vorbeschriebene Ausbildung und Anordnung der Haken wird einerseits ihre Anbringung an der Plane erleichtert und derart ausgebildet, daß sie nur sehr gering aus der Ebene der Plane herausragen und daher nur eine sehr geringe Gefährdung darstellen. Die Ausbildung und Anbringung der Haken derart, daß ihre Öffnung gegen die Plane gerichtet ist, bewirkt schon insich, daß das dort eingelegte Spannseil gegen ein unbeabsichtigtes Herausrutschen oder -fallen gesichert ist, denn das Spannseil, das unterhalb der Verbindung des Hakens mit der Plane den Haken nach unten zieht, drückt ihn damit auch gegen die Plane und verhindert damit ein Abklappen des Hakens nach außen und verhindert damit auch, daß eine Stellung des Hakens eintreten kann, in der das Seil herausrutschen könnte. Der die Hakenkrümmung überragende Überstand dient zur Verbesserung der Handhabung beim Einlegen des Seils. Durch Hintergreifen dieses Überstandes kann der Haken leicht von der Plane abgezogen und in beliebigem Winkel, unter entsprechender Verformung der Verbindung des Hakens mit der Plane, nach oben gekippt werden, um das Seil von unten her in die Hakenöffnung einzuführen und in den Haken zu legen. Aufgrund der besonderen Ausbildung und Anordnung der Haken ist es sogar möglich, das Seil mit einer vorher gelegten Schlinge in den Haken einzulegen, falls es erwünscht ist, daß das Seil an einer Stelle eine besonders starke Zugspannung auf die Plane ausübt. Zum Entfernen des Seils aus dem Haken ist es lediglich erforderlich, den Haken durch Hintergreifen des die Hakenkrümmung überragenden Überstandes nach oben zu kippen oder zu schwenken, das Seil rutscht dann von selbst aufgrund seiner Spannung aus dem Haken heraus. Es ist also ein sehr einfaches und schnelles Lösen der Plane möglich.

Die Ausbildung der Seilhalter mit einem Überstand ihrer äusseren Abdeckung, so daß sie auch als Rückhaltenasen dienen, die an dem Kastenaufbau angeordnet sind, hat den Vorteil, daß für die gesamte Planenbefestigung neben dem elastischen Spannseil lediglich zwei verschieden geformte Teile benötigt werden, nämlich einerseits die an der Plane zu befestigenden Haken und andererseits die am Kastenaufbau befestigten Seilhalter, die aufgrund ihrer besonderen Ausformung an beiden Enden zur Halterung und Befestigung des Seiles dienen, und dazwischen, den Haken an der Plane jeweils gegenüberliegend, als Rückhaltenasen, so daß das elastische Seil zwischen diesen Rückhaltenasen an dem Kasten und den Haken an der Plane verspannbar ist. Nach einer vorteilhaften Ausbildung der Neuerung sind die Rückhaltenasen an der Kastenseite jeweils in der Mitte zwischen zwei in geringem Abstand an der Plane angebrachten Haken unterhalb der Planenunterkante an der Seitenwand angeordnet. Nach einer anderen Ausführungsform sind die Rückhaltenasen an der Kastenseite jeweils paarweise unterhalb eines Hakens an der Plane seitlich rechts und links dazu versetzt angeordnet. Die Haken sind zweckmäßig an der Plane auch seitlich versetzt zu den Seilhaltern angeordnet. Nach einer besonders vorteilhaften Ausführungsform ist die Plane an einer oder mehreren Überlappungsstellen über den Ecken des Aufbaus mit einem Klettenband als Verschluß versehen. Dadurch ergibt sich der Vorteil, daß die Plane jederzeit schnell und einfach geteilt und wieder zusammengesetzt werden kann, insbesondere, wenn eine Seite der Plane zum Be- oder Entladen zu öffnen ist.

Die Neuerung wird nachstehend anhand eines Ausführungsbeispiels mit Bezug auf die Zeichnungen näher erläutert. In den Zeichnungen zeigen :

Fig. 1 perspektivische Teilansicht eines Fahrzeuganhängers mit Plane,

Fig. 2 Längsschnitt durch eine Seilbefestigung,

Fig. 3 Draufsicht auf eine Seilbefestigung,

Fig. 4 Draufsicht auf einen an der Plane zu befestigenden Haken,

Fig. 5 Seitenansicht eines Hakens nach Fig. 4,

Fig. 6 Schnitt durch einen Haken nach Fig. 4 entlang der Linie VI-VI,

Fig. 7 Draufsicht auf einen Seilhalter (Rückhalte-Nase)

Fig. 8 Schnitt durch einen Seilhalter entlang der Linie VIII-VIII der Fig. 7,

Fig. 9 Frontansicht eines Seilhalters (Rückhalte-Nase).

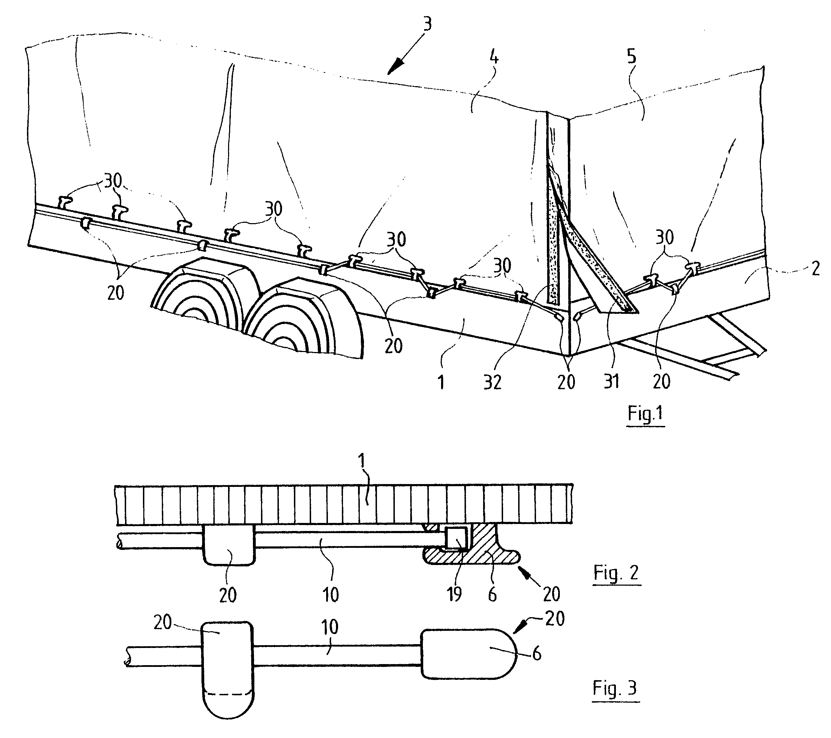

In Fig. 1 ist ein tandemachsiger Fahrzeuganhänger in perspektivischer Teilansicht dargestellt. Der Kastenaufbau besteht aus Seitenwänden 1 und der hier sichtbaren Frontwand 2 usw.. Über dem Kasten ist ein hier nicht dargestelltes und sichtbares Gestell aufgebaut, über das eine Plane 3 gelegt ist. Die Plane 3 bildet Seitenwände 4 und die hier sichtbare Frontwand 5.

Die nachfolgende Beschreibung wird mit Bezug auf eine Seitenwand 1 des Kastens gegeben. Gleiches gilt selbstverständlich auch für die Frontwand 2 und für andere Wände des Kastens. Sinngemäßes gilt weiterhin dafür, daß das elastische Spannseil nicht nur zwischen den Enden einer Seitenwand gespannt ist, sondern zwei oder mehrere Seitenwände umgibt.

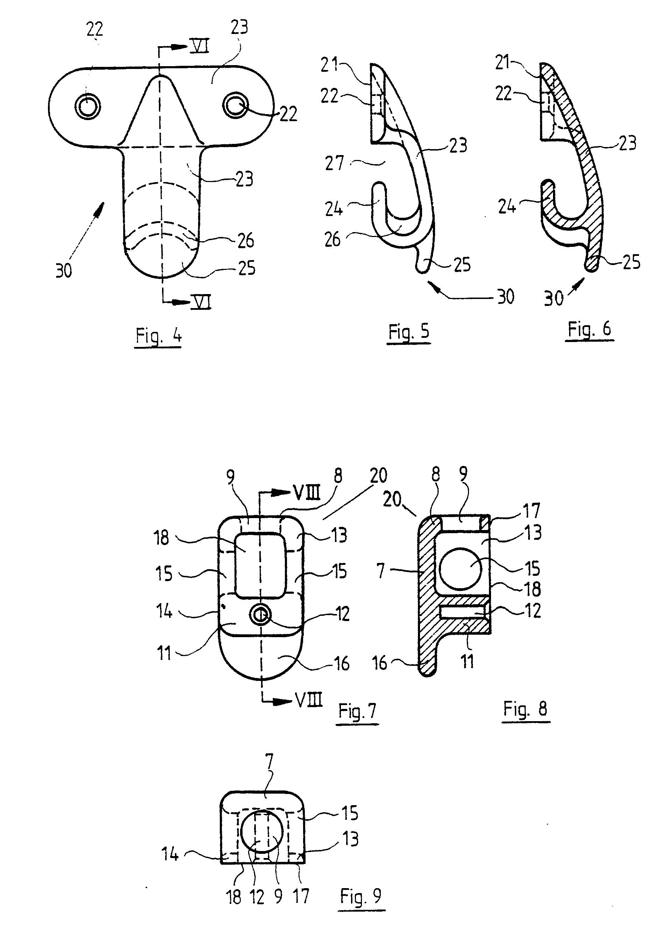

An beiden Enden der Seitenwand 1 ist ein Seilhalter 6 nahe der Oberkante befestigt. Der Seilhalter besteht, entsprechend den Figuren 7 bis 9, aus einem im wesentlichen kastenförmigen Teil mit einer äußeren Abdeckung 7, einer Schmalwand 8 mit einer Ausnehmung 9 zur Aufnahme des Querschnittes des Seiles 10 und einer gegenüberliegenden Schmalseite 11, die mit größerer Materialstärke ausgebildet, mit einem Sackloch oder einer Durchbohrung 12 versehen sein kann zur Aufnahme eines Befestigungsmittels. Die beiden Seitenwände 13 und 14 können glatt durchgehend ausgebildet sein, sie können auch mit Ausnehmungen oder Durchbrechungen 15 versehen sein, die dann achsparallel zueinander angeordnet sind, zweckmäßig auch mit ihren Achsen in einer Ebene zu der Durchbrechung 9 liegen und wie diese zur Aufnahme des Querschnittes des Seiles 10 dienen.

Zweckmäßig über die Schmalseite 11 hinausragend und in Verlängerung der äußeren Abdeckung 7 ist ein Überstand 16 angeordnet, der im Grundriß gesehen, entsprechend der Fig. 7, eine abgerundete äußere Begrenzung aufweist. Der vorbeschriebene Seilhalter (Rückhalte-Nase) 20 ist an seiner Auflagefläche 17 eben ausgebildet und weist eine rechteckige Öffnung 18 auf, die nach dem Aufsetzen und Befestigen auf der Fahrzeugwand 1 geschlossen ist. Der vorbeschriebene Seilhalter (die Rückhalte-Nase) 20 dient entsprechend den Figuren 2 und 3 zunächst zur festen und unverlierbaren Anbringung des elastischen Seils 10, das an seinen Enden mit Verdickungen 19 versehen ist. Das Seil wird nach Durchführung durch die Ausnehmung 9 mit der Verdickung 19 versehen oder aber es ist bereits auf Länge geschnitten und an beiden Enden mit der Verdickung 19 versehen — dann wird bei dem Seilhalter 20 der untere Teil der Ausnehmung 9, der zwischen dieser Ausnehmung und der Auflagefläche liegt, herausgeschnitten und das Seil von der Auflagefläche her in den Seilhalter eingeführt, so daß die Verdickung 9, drei Viertel umgeben von der Ausnehmung, an diesen Stellen in dem Seilhalter festgehalten wird.

Der Seilhalter 20 ist mit den Durchbrechungen 15 versehen, durch die das Seil vor der festen Anbringung auf der Wand 1 und der festen Verbindung mit den End-Seilhaltebeschlägen hindurchgezogen werden kann. Diese Verbindung des Seils 10 mit Seilhaltern 20 dient zur nicht lösbaren Befestigung und Verbindung des Seils auf der Seitenwand 1. Sie ist beispielsweise dann vorteilhaft anzuwenden, wenn das Seil aus besonderen Gründen mit einer Umlenkung in eine andere Höhe geführt werden soll, oder wenn das Seil um eine Eckkante herumgeführt werden soll, beispielsweise für den Fall, daß ein Seil über eine Seitenwand 1 und eine Frontwand 2 gespannt werden soll. Mit zwei entsprechend angeordneten Seilhaltern unmittelbar an der Eckkante zwischen den beiden Wänden 1 und 2 wird das Seil um diese Kante herumgeführt.

Die Seilhalter 20 sind mit dem Überstand 16 versehen und werden in gewünschten Abständen und Positionen auf der Seitenwand über ihre Länge verteilt im gleichen Abstand von der Oberkante der Seitenwand 1 befestigt, in der Weise, daß diese Überstände 16 nach unten weisen. Die Seilhalter dienen, in dieser Weise angebracht, als Rückhalte-Nasen für das Seil. Es ist also nur ein einziges Beschlagteil erforderlich, das aufgrund seiner besonderen Ausformung für die verschiedensten Zwecke einsetzbar ist.

Im Bereich der unteren Kante der Plane 4 sind Haken 30 befestigt. Diese Haken werden mit Bezug auf die Figuren 4 bis 6 im einzelnen erläutert : Sie bestehen aus einer Basis mit Auflagefläche 21 und Bohrungen 22 für Schrauben oder Nieten zur festen Verbindung des Hakens mit der Plane. Die Basis kann bei T-förmiger Ausbildung des Hakens den Querbalken 23 des T bilden, wie das in Fig. 4 dargestellt ist. Die Verbindung des Hakens mit der Plane kann jedoch auch durch Schweißen oder Kleben erfolgen.

Von der Basis erstreckt sich der Stiel 23 in spitzem Winkel und leicht gewölbt, der an seinem unteren Ende den eigentlichen Haken 24 trägt bzw. in ihn übergeht. Außerhalb dieser Hakenabbiegung ist der Stiel 23 über die Hakenkrümmung hinaus verlängert und mit einem Überstand 25 versehen, der in der Draufsicht entsprechend der Fig. 4 mit einer Abrundung versehen sein kann. Innerhalb der Hakenkrümmung ist eine Wölbung 26 ausgebildet, die zweckmäßig der Krümmung des in den Haken eingelegten Seils entspricht. Die Einsatzöffnung 27 des Hakens befindet sich zwischen der Basis mit Auflagefläche 21 und dem Ende der Krümmung des Hakens 24. Diese Einsatzöffnung kann durch eine hier nicht dargestellte, beispielsweise elastische Feder überbrückt sein, die an der Basis befestigt ist und gegen das Ende der Hakenkrümmung anliegt, so daß ähnlich wie bei einem Karabinerhaken ein in den Haken eingelegtes Seil zurückgehalten wird. Da die Haken 30 jedoch mit ihrer Auflagefläche 21 mit der Plane verbunden werden, ist die unmittelbar darunterliegende Einsatzöffnung 27 von der Plane überdeckt und gewissermaßen gesperrt. Die Haken 30 sind in verschiedener Weise jedoch jeweils der Position der Rückhalte-Nasen 20 entsprechend an der Plane zugeordnet. Eine mögliche Anordnung ist in der Fig. 1 dargestellt.

Angepaßt an die einfache und leichte Bedienbarkeit der Planenbefestigung ist nach der Neuerung die Verbindung einzelner Planenteile. Entsprechend der Fig. 1 ist an einer Eckkante die Plane getrennt und mit einem Klettenverschluß versehen. An der einen Trennseite ist demnach ein Klettenband 31 befestigt und auf der gegenüberliegenden Seite ein Schlingensamtband 32 befestigt.

## Patentansprüche

1. Straßenfahrzeug mit offenem Kastenaufbau, der von einer, gegebenenfalls über ein Gestell oder Spriegel gelegten Plane (3) abgedeckt ist, wobei die Plane (3) mittels einer abnehmbaren Befestigung an den Außenseiten der Oberkanten des Kastenaufbaus festgezurrt ist und diese Befestigung aus einem elastischen Seil (10) besteht, das zwischen den Befestigungen (20) an beiden Enden der Kastenseiten gespannt zwischen unteren Haken an der Kastenseite sowie oberen Haken (30), den unteren Rand der Plane übergreifend, im wesentlichen zick-zack-förmig gespannt ist, dadurch gekennzeichnet, daß an oder in der Nähe der Unterkante der Plane (4) ein oder mehrere Haken (30) in Abständen voneinander befestigt sind, denen im Verlauf des gespannten Seils (10) Rückhaltenasen (20) an der Kastenwand (1) versetzt zugeordnet sind.

2. Straßenfahrzeug nach Anspruch 1, dadurch gekennzeichnet, daß das Seil (10) an seinen Enden mit je einer Verdickung (19) versehen ist, mit der es in eine Aufnahmehöhlung (13) eines Seilhalters (20) eingesetzt ist.

3. Straßenfahrzeug nach Anspruch 1 und 2, dadurch gekennzeichnet, daß der Seilhalter (20) im wesentlichen als zur Auflagefläche hin offener Kasten zur Aufnahme der Endverdickung (19) des Seils (10) ausgebildet, an einer Schmalwand (8) mit einer Ausnehmung (9) zur Aufnahme des Seilquerschnittes versehen ist.

4. Straßenfahrzeug nach Anspruch 1 und einem der vorgenannten Ansprüche, dadurch gekennzeichnet, daß die Seilhalter (20) mit einem Überstand (16) ihrer äußeren Abdeckung (7) über eine Schmalseite 11 hinaus versehen, auch als Rückhalte-Nasen (20) dienen.

5. Straßenfahrzeug nach Anspruch 1 und einem der vorstehenden Ansprüche, dadurch gekennzeichnet, daß die an der Plane (4) befestigten Haken (30) in ihren, der Hakenkrümmung gegenüberliegenden Basisteil mit einer Auflagefläche (21) versehen sind, die in der äußeren Abschlußebene des Endes des Hakens (24) liegt und mit der Plane vorzugsweise durch Kleben, Schweißen o. dgl. verbunden ist.

6. Straßenfahrzeug nach Anspruch 1 und einem der vorstehenden Ansprüche, dadurch gekennzeichnet, daß die an der Plane (4) befestigten Haken (30) bei T-förmigem Grundriß an den Enden des Querbalkens (23) mit Lochungen (22) zur Aufnahme der Verbindungsmittel mit der Plane, z. B. in Form von Nieten, versehen sind.

7. Straßenfahrzeug nach Anspruch 1 und 5 oder 6, dadurch gekennzeichnet, daß die an der Plane befestigten Haken mit ihrer Einsatzöffnung gegen die Plane gerichtet angeordnet sind.

8. Straßenfahrzeug nach Anspruch 1 und einem der vorstehenden Ansprüche, dadurch gekennzeichnet, daß die an der Plane (4) befestigten Haken (30) im Hakenbereich (24) mit einer Wölbung (26) entsprechend der Umlenkbiegung des eingelegten Seils (10) versehen sind.

9. Straßenfahrzeug nach Anspruch 1 und einem der vorstehenden Ansprüche, dadurch gekennzeichnet, daß die an der Plane (4) befestigten Haken (30) mit einer Rückhaltevorrichtung, vorzugsweise in Form einer die Einsatzöffnung (27) überdeckenden, elastischen Zunge für das eingelegte Seil (10) versehen sind.

10. Straßenfahrzeug nach Anspruch 1 und einem der vorstehenden Ansprüche, dadurch gekennzeichnet, daß die an der Plane (4) befestigten Haken (30) außerhalb der Krümmung des Hakens (24) mit einem Überstand (25) versehen sind, der an seiner Außenkante mit einer Abrundung (30) versehen sein kann.

11. Straßenfahrzeug nach Anspruch 1 und einem der vorstehenden Ansprüche, dadurch gekennzeichnet, daß die Rückhalte-Nasen (20) an der Kastenseite (1) jeweils in der Mitte zwischen zwei in geringerem Abstand an der Plane (4) angebrachten Haken (30) unterhalb der Planenunterkante an der Seitenwand (1) angeordnet sind.

12. Straßenfahrzeug nach Anspruch 1 und einem der vorgenannten Ansprüche, dadurch gekennzeichnet, daß die Rückhalte-Nasen (20) an der Kastenseite (1) jeweils paarweise unterhalb eines Hakens (30) an der Plane (4) seitlich rechts und links dazu versetzt angeordnet sind.

13. Straßenfahrzeug nach Anspruch 1 und einem der vorgenannten Ansprüche, dadurch gekennzeichnet, daß die Haken (30) an der Plane (4) seitlich versetzt zu den Seilhaltern (20) angeordnet sind.

14. Straßenfahrzeug nach Anspruch 1 und einem der vorstehenden Ansprüche, dadurch gekennzeichnet, daß die Plane (4, 5) an einer oder mehreren Überlappungsstellen über den Ecken des Aufbaus mit einem Klettenband (31, 32) als Verschluß versehen ist.

## Claims

1. A road vehicle with open box body which is covered by a tarpaulin (3) which, if need be, is placed over a frame or support, wherein the tarpaulin (3) is lashed to the outsides of the top edges of the box body by means of a removable fastening, and the said fastening comprises an elastic rope (10) which, tensioned between the fastenings (20) at both ends of the sides of the box, is tensioned in a substantially zig-zag shape between lower hooks on the side of the box and upper hooks (30) to overlap the bottom edge of the tarpaulin, characterised in that one or a plurality of mutually spaced hooks (30) are secured at, or in the vicinity of, the bottom edge of the tarpaulin (4) and have associated retaining lugs (20) staggered relative thereto on the wall (1) of the box over the extent of the tensioned rope (10).

2. A road vehicle as claimed in claim 1, characterised in that each end of the rope (10) is provided with a thickened portion (19) by which the rope is inserted into a reception recess (13) in a rope holder (20).

3. A road vehicle as claimed in claims 1 and 2, characterised in that the rope holder (20) is substantially in the form of a box, open towards the contact surface, for receiving the thickened end portion (19) of the rope (10), a narrow wall (8) of said box being provided with a cut-away portion (9) for receiving the cross section of the rope.

4. A road vehicle as claimed in claim 1 and in any one of the above claims, characterised in that the rope holders (20), provided with a projection (16) on their outer covers (7) which extends beyond a narrow side (11), also serve as retaining lugs (20).

5. A road vehicle as claimed in claim 1 and in any one of the above claims, characterised in that the hooks (30) secured to the tarpaulin (4) have on their base part located opposite their curvature a contact surface (21) which is located in the outer terminating plane of the end of the hook (24) and connected to the tarpaulin preferably by glueing, welding or the like.

6. A road vehicle as claimed in claim 1 and in any one of the above claims, characterised in that the hooks (30) secured to the tarpaulin (4) have a T-shaped plan view and are provided with holes (22) at the ends of their transverse member (23) for receiving the means, such as rivets, for connecting them to the tarpaulin.

7. A road vehicle as claimed in claims 1 and 5 or 6, characterised in that the hooks secured to the tarpaulin are disposed with their insertion openings directed towards the tarpaulin.

8. A road vehicles as claimed in claim 1 and in any one of the above claims, characterised in that the regions (24) of the hooks (30) secured to the tarpaulin (4) are provided with a curved portion (26) corresponding to the curvature of the inserted rope (10).

9. A road vehicle as claimed in claim 1 and in any one of the above claims, characterised in that the hooks (30) secured to the tarpaulin (4) are provided with a device, preferably in the form of a resilient tongue covering the insertion opening (27), for retaining the inserted rope (10).

10. A road vehicle as claimed in claim 1 and in any one of the above claims, characterised in that the hooks (30) secured to the tarpaulin (4) are provided with a projection (25) which is located outside the curvature of the hook (24) and whose outer edge may be provided with a rounded portion (30).

11. A road vehicle as claimed in claim 1 and in any one of the above claims, characterised in that each retaining lug (20) on the side (1) of the box is disposed on the side wall (1) below the bottom edge of the tarpaulin in the centre between two respective hooks (30) mounted on the tarpaulin (4) at a short distance apart.

12. A road vehicle as claimed in claim 1 and in any one of the above claims, characterised in that retaining lugs (20) on the side (1) of the box are disposed in pairs below a hook (30) on the tarpaulin (4) so as to be offset laterally to the right and left of the said hook.

13. A road vehicle as claimed in claim 1 and in any one of the above claims, characterised in that the hooks (30) on the tarpaulin (4) are disposed so as to be laterally offset relative to the rope holders (20).

14. A road vehicle as claimed in claim 1 and in any one of the above claims, characterised in that the tarpaulin (4, 5) is provided with a hook-and-loop strip (31, 32) as a fastener at one or more overlap locations over the corners of the body.

## Revendications

1. Véhicule routier du type fourgon à caisse ouverte qui est recouverte par une bâche (3) éventuellement posée par l'intermédiaire d'un bâti ou d'un arceau de pavillon, la bâche étant fermement amarrée aux faces externes des arêtes supérieures de la caisse au moyen d'une fixation libérable, cette fixation étant constituée par un câble élastique (10) qui, tendu entre les fixations (20) aux deux extrémités des côtés de la caisse, est bandé substantiellement en zigzag en coiffant le bord inférieur de la bâche, entre des crochets inférieurs sur le côté de la caisse, ainsi que des crochets supérieurs (30), caractérisé par le fait qu'un ou plusieurs crochets (30) sont fixés à distance les uns des autres sur l'arête inférieure de la bâche (4) ou à proximité de cette arête, crochets auxquels des becs de retenue (20) sont associés en quinconce, sur la paroi (1) de la caisse, dans la trajectoire du câble bandé (10).

2. Véhicule routier selon la revendication 1, caractérisé par le fait que le câble (10) est pourvu, à ses extrémités, d'un renflement respectif (19) par lequel il est introduit dans une cavité réceptrice (13) d'un arrête-câble (20).

3. Véhicule routier selon les revendications 1 et 2, caractérisé par le fait que l'arrête-câble (20) est réalisé, pour l'essentiel, sous la forme d'un caisson qui est ouvert en direction de la surface d'appui, afin de recevoir le renflement extrême (19) du câble (10), et est muni, sur une paroi étroite (8), d'un évidement (9) destiné à recevoir la section du câble.

4. Véhicule routier selon la revendication 1 et l'une des revendications précitées, caractérisé par le fait que les arrête-câble (20), dotés d'un appendice (16) sur leur recouvrement externe (7), au-delà d'un côté étroit (11), servent également de becs de retenue (20).

5. Véhicule routier selon la revendication 1 et l'une des revendications précédentes, caractérisé par le fait que les crochets (30) fixés à la bâche (4) sont munis, dans leur partie de base opposée à la courbure du crochet, d'une surface d'appui (21) qui se situe dans le plan final extérieur de l'extrémité du crochet (24) et qui est reliée à la bâche, de préférence par collage, soudage ou procédé similaire.

6. Véhicule routier selon la revendication 1 et l'une des revendications précédentes, caractérisé par le fait que les crochets (30) fixés à la bâche (4), lorsqu'ils possèdent une configuration de base en T, sont percés, aux extrémités de la branche transversale (23), d'orifices (22) destinés à recevoir les moyens de liaison avec la bâche, revêtant par exemple la forme de rivets.

7. Véhicule routier selon les revendications 1 et 5 ou 6, caractérisé par le fait que les crochets fixés à la bâche sont disposés de manière que leur ouverture d'insertion soit dirigée vers cette bâche.

8. Véhicule routier selon la revendication 1 et l'une des revendications précédentes, caractérisé par le fait que les crochets (30) fixés à la bâche (4) sont munis, dans la zone d'accrochage (24), d'un bombement (26) correspondant à la flexion de déviation du câble engagé (10).

9. Véhicule routier selon la revendication 1 et l'une des revendications précédentes, caractérisé par le fait que les crochets (30) fixés à la bâche (4) sont équipés d'un dispositif de retenue revêtant, de préférence, la forme d'une languette élastique recouvrant l'ouverture d'insertion (27) et associée au câble engagé (10).

10. Véhicule routier selon la revendication 1 et l'une des revendications précédentes, caractérisé par le fait que les crochets (30) fixés à la bâche (4) sont pourvus, à l'extérieur de la courbure du crochet (24), d'un appendice (25) pouvant être muni d'un arrondi (30) sur son arête extérieure.

11. Véhicule routier selon la revendication 1 et l'une des revendications précédentes, caractérisé par le fait que les becs de retenue (20) situés sur le côté (1) de la caisse sont disposés, sur la paroi latérale (1), au-dessous de l'arête inférieure de la bâche, au centre entre deux crochets respectifs (30) espacés d'une faible distance sur la bâche (4).

12. Véhicule routier selon la revendication 1 et l'une des revendications précitées, caractérisé par le fait que les becs de retenue (20) situés sur le côté (1) de la caisse sont disposés par paires respectives au-dessous d'un crochet (30) situé sur la bâche (4), avec décalage latéral vers la droite et vers la gauche par rapport à ce crochet.

13. Véhicule routier selon la revendication 1 et l'une des revendications précitées, caractérisé par le fait que les crochets (30) sont disposés, sur la bâche (4), avec décalage latéral par rapport aux arrête-câble (20).

14. Véhicule routier selon la revendication 1 et l'une des revendications précédentes, caractérisé par le fait que la bâche (4, 5) est munie, dans une ou plusieurs zones de chevauchement au-dessus des coins de la caisse, d'une bande (31, 32) à système d'attache auto-agrippant qui fait fonction d'obturation.

Fig.1

Fig. 2

Fig. 3

0 098 527

0 098 527

Fig. 4

Fig. 5

Fig. 6

Fig. 7

Fig. 8

Fig. 9

2